# EUROPÄISCHE PATENTSCHRIFT

(11) **EP 2 583 057 B1**
(45) Veröffentlichungstag und Bekanntmachung des Hinweises auf die Patenterteilung: **14.05.2014**
(21) Anmeldenummer: 12717588.3
(22) Anmeldetag: 14.03.2012
(51) Int. Cl.: G01B 21/20, G01B 21/30

(54) **VORRICHTUNG UND VERFAHREN ZUR VERMESSUNG VON OBERFLÄCHEN**
DEVICE AND METHOD FOR MEASURING SURFACES
DISPOSITIF ET PROCÉDÉ DE MESURE DE SURFACES

(30) Priorität: 14.04.2011 DE 102011017047; 14.09.2011 DE 102011113138
(43) Veröffentlichungstag der Anmeldung: 24.04.2013
(73) Patentinhaber: INB Vision AG, 39120 Magdeburg (DE)
(72) Erfinder: LILIENBLUM, Tilo, 39104 Magdeburg (DE); SCHMIDT, Wolfram, 06463 Stadt Falkenstein (DE)
(74) Vertreter: Ullrich & Naumann
(86) Internationale Anmeldenummer: PCT/DE2012/200014
(87) Internationale Veröffentlichungsnummer: WO 2012/139570

(56) Entgegenhaltungen:
- WO-A1-2008/033090
- DE-A1-102006 001 496
- JP-A- 2002 048 527
- "Wafer Geometry Characteristics", INTERNET CITATION, 24. Juli 2004 (2004-07-24), XP002428986, Gefunden im Internet: URL:http://www.hologenix.com/Wafer-Geo-Cha racteristics.pdf [gefunden am 2007-04-12]

## Beschreibung

Die vorliegende Erfindung betrifft ein Verfahren zur Erkennung und Vermessung von lokalen Formabweichungen in ebenen, gekrümmten oder gewölbten Oberflächen eines Prüfobjekts, wobei dreidimensionale Messdaten der Oberflächen mit einer Auswerteeinrichtung ausgewertet werden. Ferner betrifft die vorliegende Erfindung eine Vorrichtung zur Erkennung und Vermessung lokaler Formabweichungen in ebenen, gekrümmten oder gewölbten Oberflächen eines Prüfobjekts, mit einer Auswerteeinrichtung zur Auswertung dreidimensionaler Messdaten.

Aus dem Stand der Technik sind verschiedene Vorrichtungen und Verfahren zur Erkennung oder Vermessung von lokalen Formabweichungen in Design- und/oder Funktionsflächen bekannt. Zum Einen existieren manuelle oder berührende Verfahren und zum Anderen optische Messverfahren mit unterschiedlichen Auswertemethoden.

Betreffend die manuellen Verfahren ist ein Anschleifen der Oberfläche mit einem Schleifstein oder einem flexiblen Pad bekannt. Durch das Anschleifen werden lokale Erhöhungen oder Vertiefungen wie auch konkave Bereiche in einer Fläche sichtbar. Das menschliche Auge kann diese erkennen. Allerdings ist hierbei problematisch, dass derartige Verfahren nur für Metalloberflächen geeignet sind und in diesem Fall eine eventuelle Korrosionsschutzschicht auf der Oberfläche beschädigt wird. Ferner erfordert diese Methode einen trainierten Auditor und ist diese zudem zeitaufwändig. Ferner ist ein manuelles Abfühlen einer Oberfläche mit Spezialhandschuhen bekannt. Der Auditor erkennt dabei Unebenheiten auf der Oberfläche. Problematisch hierbei ist, dass es sich um ein subjektives Verfahren handelt, welches nur durch einen trainierten Auditor bewerkstelligt werden kann und zudem zeitaufwändig ist. Als weitere Verfahren sind das Haarlineal, die visuelle Inspektion einer rohen oder lackierten Oberfläche oder Verfahren mit entsprechenden Reflexionen eines projizierten Musters auf einer Oberfläche bekannt. Hierbei werden Muster reflektiert und eventuelle Unregelmäßigkeiten der Oberfläche können sichtbar gemacht werden. Problematisch bei diesen Verfahren sind die Subjektivität sowie der entsprechend hohe Zeitaufwand.

Mittels optischer Messverfahren sind eine dreidimensionale Vermessung von Oberflächen und eine anschließende Erkennung und Messung von lokalen Abweichungen der Oberflächenform möglich. Bspw. ist aus dem Stand der Technik der CAD-Vergleich bekannt. Hierbei wird die Differenz zwischen gemessenen Punkten von 3D-Messdaten und den CAD-Daten berechnet und ausgewertet. Problematisch hierbei ist, dass nicht nur lokale, sondern auch globale Abweichungen angezeigt werden, die die lokalen Abweichungen regelmäßig überwiegen und verdecken.

Ferner ist aus der EP 0 921 374 B1 die Methode eines Assoziativspeichers bekannt. Hierbei handelt es sich um ein spezielles künstliches neuronales Netz. In einem Einrichtprozess werden fehlerfreie Teile vermessen. Mit diesen Messdaten wird das künstliche neuronale Netz trainiert und beim Abruf des Netzes mit den Messdaten von Prüfteilen werden in den Prüfteilen auftretende Fehler geglättet. Bei einer anschließenden Differenzbildung mit den Originaldaten werden diese Fehler erkannt und gemessen. Nachteilig hierbei ist, dass das Verfahren nicht angewendet werden kann, wenn keine fehlerfreien Teile oder i.O.-Teile zur Verfügung stehen.

Ferner ist das Verfahren der Polynomapproximation bekannt. Hierbei werden Messdaten mit Hilfe von Polynomen oder ähnlichen Verfahren approximiert, wodurch die Daten geglättet werden. Danach wird die Differenz zwischen den geglätteten Daten und den Originaldaten berechnet, wodurch Fehlstellen erkannt und gemessen werden können. Von Nachteil ist hierbei, dass es insbesondere im Bereich von Designelementen oder Objekträndern zu Artefakten kommen kann, da diese ebenfalls geglättet werden. Dies führt zu einer schlechten Interpretierbarkeit der Messergebnisse durch die Auditoren.

Außerdem kann eine mathematische Analyse von bekannten Fehlstellen durch Auswertung eines Schnitts durch die 3D-Daten erfolgen. Hierbei wird die Differenz zu einer interaktiv in die Daten hineingelegte Linie gezeigt. Problematisch ist jedoch, dass nur bekannte Fehlstellen analysiert werden können. Die Auswertung der Daten kann nicht automatisch, sondern nur durch einen geschulten Mitarbeiter erfolgen. Eine Gesamtauswertung einer Oberfläche ist nicht möglich.

Aus dem Stand der Technik ist die Analyse der Krümmung bekannt. Hierbei kann das Anschleifen der Oberfläche mit einem Schleifstein durch eine eindimensionale Berechnung der Krümmung aus den 3D-Daten angenähert werden. Allerdings erfordert dieses Vorgehen eine genaue Kenntnis der Fehlerausdehnung. Ferner entspricht das Ergebnis nicht einem dem Auditor bekannten Bild, welches er nach der Behandlung mit einem Schleifstein erhält.

Aus der WO 2008/033090 ist ein Verfahren zur Erkennung und Vermessung von Formabweichungen in gewölbten Oberflächen bekannt.

Der vorliegenden Erfindung liegt daher die Aufgabe zugrunde, ein Verfahren und eine Vorrichtung der eingangs genannten Art derart auszugestalten und weiterzubilden, dass eine zerstörungsfreie Prüfung von Prüfobjekten mit objektiven und einfach zu interpretierenden Bewertungsergebnissen ermöglicht ist.

Erfindungsgemäß wird die voranstehende Aufgabe durch ein Verfahren mit den Merkmalen des Anspruchs 1 gelöst. In Bezug auf eine erfindungsgemäße Vorrichtung wird die voranstehende Aufgabe durch die Merkmale des Anspruchs 14 gelöst.

Für das Verfahren ist hierbei von besonderer Bedeutung, dass die Auswerteeinrichtung mindestens ein virtuelles Filterelement als Konkavfilter zum Erkennen konkaver Teilbereiche in ebenen oder konvexen Oberflächen und/oder als Konvexfilter zum Erkennen konvexer Teilbereiche in ebenen oder konkaven Oberflächen einsetzt, dass das Filterelement Beträge der Formabweichungen ermittelt und dass diese über eine Ausgabeeinrichtung als Messwerte ausgegeben werden.

Im Folgenden sollen die von der Auswerteeinrichtung auszuwertenden dreidimensionalen Messdaten als Messdaten oder Messpunkte und die mit dem Konkav- oder Konvexfilter ermittelten Beträge der Formabweichungen als Messwerte bezeichnet werden.

In erfindungsgemäßer Weise ist zunächst erkannt worden, dass eine zerstörungsfreie Prüfung von Prüfobjekten dann ermöglicht ist, wenn die Auswerteeinrichtung mindestens ein virtuelles Filterelement aufweist. Erfindungsgemäß kann das virtuelle Filterelement als Konkavfilter zum Erkennen konkaver Teilbereiche in ebenen oder konvexen Oberflächen und/oder als Konvexfilter zum Erkennen konvexer Teilbereiche in ebenen oder konkaven Oberflächen eingesetzt werden. Hierdurch kann eine Prüfung und Erkennung von Formabweichungen in Oberflächen erfolgen. Durch die Einsetzbarkeit als Konkavfilter oder Konvexfilter ist eine Anpassung auf die entsprechende Messaufgabe ermöglicht. Ferner ist ein Vermessen eines Prüfobjekts von konkaver und konvexer Seite, bspw. durch nacheinander erfolgende Messungen, durchführbar. Im Hinblick auf den Erhalt objektiver Bewertungsergebnisse ermittelt das Filterelement Beträge der Formabweichungen und werden diese über eine Ausgabeeinrichtung als Messwerte ausgegeben. Durch die ermittelten Beträge der Formabweichungen ist für den Auditor eine objektive Bewertung ermöglicht. Aufgrund der gewählten Berechnungsmethode, die ein Abschleifen eines Prüfobjekts mit einem Schleifstein oder Pad darstellt, ist eine einfache Interpretierbarkeit der Messergebnisse erreicht.

Folglich sind mit dem erfindungsgemäßen Verfahren und mit der erfindunggemäßen Vorrichtung ein Verfahren und eine Vorrichtung der eingangs genannten Art derart ausgestaltet und weitergebildet, dass eine zerstörungsfreie Prüfung von Prüfobjekten mit objektiven und einfach zu interpretierenden Bewertungsergebnissen gewährleistet ist.

Hinsichtlich der Ausgabeeinrichtung ist denkbar, dass es sich um eine Anzeigeeinheit, bspw. ein Display, einen Computermonitor oder einen Drucker handelt. Ferner ist denkbar, dass die Messwerte durch einen Projektor auf das Prüfobjekt projiziert werden. Somit können die Formabweichungen unmittelbar am Prüfobjekt gekennzeichnet werden.

Im Konkreten kann das Filterelement als Geradenabschnitt oder als Flächenelement ausgebildet sein. Hierbei kann anhand der Messaufgabe bzw. der Messdaten das Filterelement den Anforderungen entsprechend ausgewählt werden. Es ist denkbar, dass die Größe, Form und/oder Orientierung des Filterelements bezogen auf die 3D-Messdaten definiert wird. Ferner kann das Filterelement in seiner Form und seinen Abmessungen einem Schleifstein entsprechen, mit dem man lokale Formabweichungen durch Anschleifen sichtbar machen kann. Das Filterelement weist einen Schwerpunkt auf, der sich vorzugsweise in der Mitte des Filterelements befindet.

Erfindungsgemäß ist das Filterelement möglichst parallel zu den Messdaten orientiert. Dies kann mittels einer Ausgleichsgeraden oder einer Ausgleichsebene durch einen aktuell betrachteten Messpunkt und mehrere umliegende Messpunkte der Messdaten realisiert werden. Die Ausgleichung kann bspw. mit der Methode der kleinsten Quadrate erfolgen und wird z.B. in Bronstein, Taschenbuch der Mathematik, 24. Auflage, Leipzig: BSB Teuber 1989, Seite 787 beschrieben. Für die Ausgleichsgerade oder die Ausgleichsebene, die auch als Ausgleichsfläche bezeichnet werden kann, wird der Anstieg bzw. die Orientierung ermittelt. Das Filterelement wird so gedreht oder positioniert, dass es den gleichen Anstieg hat und weitestgehend parallel zu den Messdaten angeordnet ist. In weiter vorteilhafter Weise kann das Filterelement bezüglich Messpunkten der Messdaten jeweils derart ausgerichtet werden, dass der aktuell betrachtete Messpunkt auf der Normalen des Filterelements liegt. Vom Schwerpunkt des Filterelements ausgehend wird die Normale definiert. Ist das Filterelement als Flächenelement ausgebildet, so steht die Normale senkrecht auf dem Flächenelement. Mit anderen Worten ist die Normale der Normalenvektor des Flächenelements. Ist das Filterelement als Geradenabschnitt ausgebildet, so steht die Normale ebenfalls senkrecht auf dem Geradenabschnitt und zeigt auf oder verläuft durch den ausgewählten oder betrachteten 3D-Messpunkt.

Erfindungsgemäß wird mindestens ein Messpunkt der Messdaten, der den geringsten Abstand zum Filterelement aufweist, als Auflagepunkt definiert. Im Falle eines Geradenabschnitts wird der mindestens eine Auflagepunkt dadurch berechnet, dass auf jeder Seite des Schwerpunktes des Geradenabschnitts der Messpunkt mit dem geringsten Abstand zum Geradenabschnitt als Auflagepunkt definiert wird. Ist der aktuell betrachtete Messpunkt, der auf der Normalen des Geradenabschnitts liegt, der Punkt mit dem geringsten Abstand zum Geradenabschnitt, so wird dieser Punkt als Auflagepunkt definiert. Dies stellt ein Sonderfall dar, in dem der Auflagepunkt mit dem aktuell betrachteten Messpunkt zusammenfällt. Ist das Filterelement als Flächenelement ausgebildet, so erfolgt eine Einteilung um den Schwerpunkt herum in vier Quadranten. Für jeden Quadranten wird danach der Messpunkt mit dem geringsten Abstand zum Flächenelement ermittelt. Von diesen vier ermittelten Messpunkten werden die drei Punkte mit dem geringsten Abstand als Auflagepunkte ausgewählt. Sowohl beim Geradenabschnitt als auch bei einem Flächenelement kann die Orientierung des Filterelements durch die berechneten Auflagepunkte neu definiert werden. Hierbei ist denkbar, dass diese Anpassung der Orientierung so oft wiederholt wird, bis sich die Orientierung des Filterelements nicht mehr ändert. In weiter vorteilhafter Weise wird das Filterelement entlang seiner Normalen derart in Richtung der Messdaten verschoben, bis das Filterelement auf dem Auflagepunkt aufliegt. Im Falle eines Geradenabschnitts erfolgt ein Verschieben entlang der Normalen des Geradenabschnitts in Richtung des aktuell betrachteten Messpunkts. Ist der Messpunkt nicht der Punkt mit dem geringsten Abstand zum Geradenabschnitt, so wird der Geradenabschnitt bis zum Aufliegen auf den zuvor bestimmten Auflagepunkten verschoben. Ist der Messpunkt der Punkt mit dem geringsten Abstand bezüglich des Geradenabschnitts, so wird der Geradenabschnitt so lange in Richtung seiner Normalen verschoben, bis der Geradenabschnitt auf dem aktuell betrachteten Messpunkt aufliegt. Auflagepunkt und Messpunkt liegen in diesem Fall aufeinander oder fallen zusammen.

Im Konkreten kann der Abstand zwischen Filterelement und betrachtetem Messpunkt in Richtung der Normalen des Filterelements oder in einer definierten Richtung gemessen werden. Bei der definierten Richtung kann es sich um eine Koordinatenrichtung, bspw. die Z-Achse eines Koordinatensystems, handeln. Durch Messen des Abstands in einer definierten Richtung kann der Berechnungsaufwand reduziert werden.

Im Konkreten kann der Konkavfilter von der konvex gewölbten Seite an die Oberfläche herangeführt werden und/oder kann der Konvexfilter von der konkav gewölbten Seite an die Oberfläche herangeführt werden. Die Auswahl zwischen Konkavfilter und Konvexfilter kann durch die Prüfaufgabe vorgegeben werden und durch den Auditor erfolgen. Ferner ist denkbar, dass durch Analyse der Oberflächenform eines oder mehrerer zu überprüfender Teile eine automatische Auswahl von Konkavfilter oder Konvexfilter erfolgt. Ferner ist denkbar, dass die Auswahl von Konkav- oder Konvexfilter an Hand von CAD-Daten des Bauteils berechnet wird.

Hinsichtlich der Veranschaulichung der berechneten Messwerte können diese als Grauwert oder in Farbdarstellungen in einem Diagramm dargestellt werden. Bei entsprechender Ausgestaltung des Diagramms kann hierbei eine Veranschaulichung oder ein Bild erzeugt werden, welches der Auditor aus seiner bisherigen Erfahrung, bspw. einem Anschleifen mit einem Schleifstein oder Pad, kennt und interpretieren kann. Ferner können die Messwerte durch einen Projektor auf das Prüfobjekt projiziert werden. Hierdurch ist eine Kennzeichnung der Formabweichungen unmittelbar am Prüfobjekt ermöglicht.

Hinsichtlich einer Vorglättung oder einer Eliminierung von Störungen in den Messwerten, bspw. einer Ausreißereliminierung, ist es von Vorteil, wenn die Messdaten vor einer Verarbeitung mit dem virtuellen Filterelement mit Glättungsfiltern gefiltert werden. Hierbei kann es sich um Median- und/oder Gaussfilter handeln. Hierdurch werden Störungen in den Messdaten weitestgehend beseitigt und können Berechnungsfehler nahezu ausgeschlossen werden.

Ferner können die berechneten Messwerte nach einer Verarbeitung mit dem virtuellen Filterelement mit Hochpass- und/oder Tiefpassfiltern gefiltert werden. Hierdurch können möglicherweise durch die Verarbeitung mit dem virtuellen Filterelement entstandene Ausreißer ausgeblendet oder nicht berücksichtigt werden.

Hinsichtlich einer Vereinfachung und/oder einer Datenreduzierung können nur ausgewählte Messpunkte durch das Filterelement ausgewertet werden. Hierbei kann - entsprechend den Genauigkeitsanforderungen - eine Anpassung dergestalt erfolgen, dass bspw. nur jeder zweite Messpunkt in die Auswertung mit einbezogen wird. Ferner ist im Hinblick auf eine Vereinfachung denkbar, dass Punkte auf dem Filterelement festgelegt werden, mit deren Abstand zu den Messdaten die Auswertung erfolgen kann. Insofern können die Punkte für die Bestimmung des Abstands außerhalb des Schwerpunkts des Filterelements liegen. Ferner kann im Hinblick auf eine Vereinfachung eine äquidistante Punktewolke für die Messdaten verwendet werden. Hierbei ist denkbar, dass für eine Abstandsmessung in freier Richtung mit dem Bresenham-Algorithmus nährungsweise eine Gerade beschrieben werden kann. Entsprechendes ist in J. E. Bresenham: Algorithm for computer control of a digital plotter, IBM Systems Journal 4, 1 (1965), auf S. 25-30 offenbart. Dies wird hiermit in die Offenbarung der vorliegenden Anmeldung eingeschlossen.

Im Hinblick auf die Orientierung des Filterelements ist denkbar, dass die Orientierung des Filterelements für jeden Messpunkt oder für ausgewählte Messpunkte der Messdaten variabel vorgegeben wird. Hierdurch wird das Vorgehen aus der Praxis simuliert, den Konturen der Außenhaut mit einem Schleifstein zu folgen.

Im Hinblick auf eine Vermeidung von Artefakten in Randbereichen der Oberfläche oder bei nicht vermessenen Bereichen der Oberfläche kann das Filterelement verkleinert werden. Durch die Verkleinerung des Filterelements kann eine gesonderte Behandlung erfolgen und kann das Entstehen von Artefakten weitestgehend verhindert werden. Hierbei ist denkbar, dass der Punkt für die Bestimmung des Abstands außerhalb des Schwerpunkts des Filterelements liegen kann.

In vorteilhafter Weise können die Messwerte des Konvexfilters - zur gemeinsamen Darstellung mit den Messwerten des Konkavfilters in einem Schaubild - invertiert werden. Eine Vertiefung auf der Rückseite einer Oberfläche entspricht einer Erhöhung auf der Vorderseite. Somit kann nach einer Invertierung der Messwerte des Konvexfilters eine Zusammenführung mit den Messwerten des Konkavfilters in ein Schaubild erfolgen. Eine entsprechende Invertierung kann auch bei einer Farb- oder Grauwertskala vorgenommen werden.

Im Konkreten kann das Filterelement um einen bestimmbaren Betrag unterhalb des Auflagepunkts aufliegen. Mit anderen Worten liegt das Filterelement nicht auf den höchsten Punkten der Messdaten auf, sondern liegt es um einen bestimmten Betrag unterhalb dieser höchsten Punkte. Die Vorgabe kann durch einen bestimmbaren Betrag zahlenmäßig direkt vorgegeben werden. Ferner kann dieser Betrag durch einen Parameter "Kraft" errechnet werden. Die Kraft mit der in der Praxis bspw. ein Schleifstein über die Oberfläche geführt wird, korreliert mit einem durch den Schleifvorgang abgetragenen Volumen. Bezogen auf das vorliegende Verfahren bedeutet dies, dass das Flächenelement demnach um einen Betrag unterhalb des Auflagepunktes aufliegt, wobei das Volumen, welches durch das Flächenelement und die Oberfläche begrenzt wird, einem bestimmten Betrag entspricht. Für den Geradenabschnitt gilt in analoger Weise die durch Oberfläche und Geradenabschnitt aufgespannte Fläche. Dies ist mit dem Anschleifen mit einem Schleifstein dahingehend vergleichbar, dass während des Schleifprozesses erhabene Stellen dadurch sichtbar werden, dass das Material stärker abgeschliffen wird und dadurch glänzt. Hierdurch werden Erhebungen mit dem Konkavfilter mit einem anderen Vorzeichen als konkave Bereiche dargestellt. So weisen die höchsten Punkte der Messdaten, bspw. die Auflagepunkte, auf denen das Filterelement aufliegt, nicht mehr den Abstand 0, sondern einen entsprechenden Betrag eines Abstands mit anderen Vorzeichen auf. Hierdurch wird das Abschleifen mit einem Schleifstein nachgestellt und ähnelt das resultierende Bild noch mehr einem dem Auditor aus der Praxis bekannten Bild.

Im Hinblick auf die Dimensionierung des Filterelements ist denkbar, dass Größe, Form und/oder Orientierung des Filterelements aus den CAD-Daten berechnet werden. Somit kann eine Anpassung des Filterelements an die zu prüfende Oberfläche des Prüfobjekts erfolgen. Durch die Berechnung ist insoweit eine automatische Anpassung des Filterelements an das Prüfobjekt realisiert. Ferner ist denkbar, dass die Auswahl von Konkav- oder Konvexfilter an Hand von CAD-Daten des Bauteils berechnet wird.

In weiter vorteilhafter Weise kann die Flexibilität des Filterelements vorgegeben werden. Mit anderen Worten wird eine Flexibilität des Filterelements zugelassen, um sich an die Grundform der zu vermessenden Oberfläche anzupassen. Dies entspricht in der taktilen mechanischen Prüfung eingesetzten flexiblen Pads, mit denen Oberflächenformfehler sichtbar gemacht werden können.

In Bezug auf die Bereitstellung der Messdaten können diese durch Vermessung einer Oberfläche als Messpunkte, insbesondere als Punktewolke, ermittelt werden. Ferner können die Messdaten als geometrische Flächendaten vorliegen. Hierbei ist denkbar, dass auf den geometrischen Flächendaten Messpunkte ausgewählt werden.

Im Konkreten ist denkbar, dass die zu verarbeitenden Messdaten und/oder die berechneten Messwerte mittels CAD-Vergleich, Assoziativspeicher und/oder Polynomapproximation vor- oder nachbearbeitet werden.

Ferner können die Messdaten mehrfach mit unterschiedlichen Filterelementen gefiltert werden. Hierbei kann es sich um einen kombinierten Einsatz von Konkavfilter und Konvexfilter handeln. Hierbei können beide Filter angewandt werden und die jeweiligen Messergebnisse gespeichert werden. In weiter vorteilhafter Weise kann aus den Ergebnissen der einzelnen Filterungen durch Datenfusion ein Gesamtergebnis errechnet werden. Die Datenfusion kann vorliegend zur Vervollständigung und Zusammenführung möglicherweise lückenhafter Messdaten zur Datenbereinigung beitragen. Hierbei kann der Punkt oder die Bestimmung des Abstands zwischen Filterelement und betrachtetem Messpunkt außerhalb des Schwerpunkts des Filterelements liegen.

Im Hinblick auf eine Verwendung bei weiteren Messdaten können neben dreidimensionalen Messdaten auch Daten anderer Dimensionen oder physikalischer Größen, bspw. Temperatur, insbesondere 2D-Daten oder 4D-Daten verarbeitet werden. Bei den 2D-Daten kann es sich bspw. um Daten eines Zeilenscanners handeln. Im Hinblick auf die 4D-Daten kann es sich um Voxeldaten, Zeitverläufe oder Strömungsfelder handeln. Hierbei ist denkbar, dass die Dimension des Filterelements eine oder mehrere Dimensionen kleiner als die Dimension der zu verarbeitenden Daten ist.

Die Vorrichtung gemäß Anspruch 14 dient zur Durchführung eines erfindungsgemäßen Verfahrens. Dabei ist für die Vorrichtung von besonderer Bedeutung, dass die Auswerteeinrichtung mindestens ein virtuelles Filterelement als Konkavfilter zum Erkennen konkaver Teilbereiche in ebenen oder konvexen Oberflächen und/oder als Konvexfilter zum Erkennen konvexer Teilbereiche in ebenen oder konkaven Oberflächen aufweist und dass der Auswerteeinrichtung eine Ausgabeeinrichtung zur Ausgabe der Messwerte zugeordnet ist.

Hinsichtlich der Ausgabeeinrichtung ist denkbar, dass es sich um eine Anzeigeeinheit, bspw. ein Display, einen Computermonitor oder einen Drucker handelt. Ferner ist denkbar, dass die Messwerte durch einen Projektor auf das Prüfobjekt projiziert werden. Somit können die Formabweichungen unmittelbar am Prüfobjekt gekennzeichnet werden.

Im Hinblick auf die Bereitstellung von Messdaten kann eine Einrichtung zur optischen, insbesondere dreidimensionalen Vermessung des Prüfobjekts vorgesehen sein. Mit anderen Worten kann ein optisches 3D-Messsystem zur Erzeugung oder Generierung der 3D-Daten dienen. Bei der Auswerteeinheit kann es sich um eine speicherprogrammierbare Steuerung oder um einen Computer handeln.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung, ein Ausführungsbeispiel des erfindungsgemäßen Verfahrens mit einem als Filterelement dienenden Geradenabschnitt als Konkavfilter,
- Fig. 2: in einer schematischen Darstellung ein Ausführungsbeispiel des erfindungsgemäßen Verfahrens mit einem als Filterelement dienenden Geradenabschnitt als Konvexfilter,
- Fig. 3: ein Diagramm, in dem am Beispiel des Bereichs um eine Griffmulde einer Fahrzeugtür die Messergebnisse eines Konkavfilters dargestellt sind und
- Fig. 4: Diagramme mit teilweise invertierten Messwerten,
- Fig. 5: in einer schematischen Darstellung ein Ausführungsbeispiel des erfindungsgemäßen Verfahrens mit einem als Filterelement dienenden Geradenabschnitt als Konkavfilter, bei dem das Filterelement um einen bestimmbaren Betrag unterhalb zweier Auflagepunkte aufliegt, und
- Fig. 6: in einer schematischen Darstellung ein Ausführungsbeispiel des erfindungsgemäßen Verfahrens mit einem als Filterelement dienenden Geradenabschnitt als Konkavfilter, bei dem das Filterelement um einen bestimmbaren Betrag unterhalb eines Auflagepunkts aufliegt.

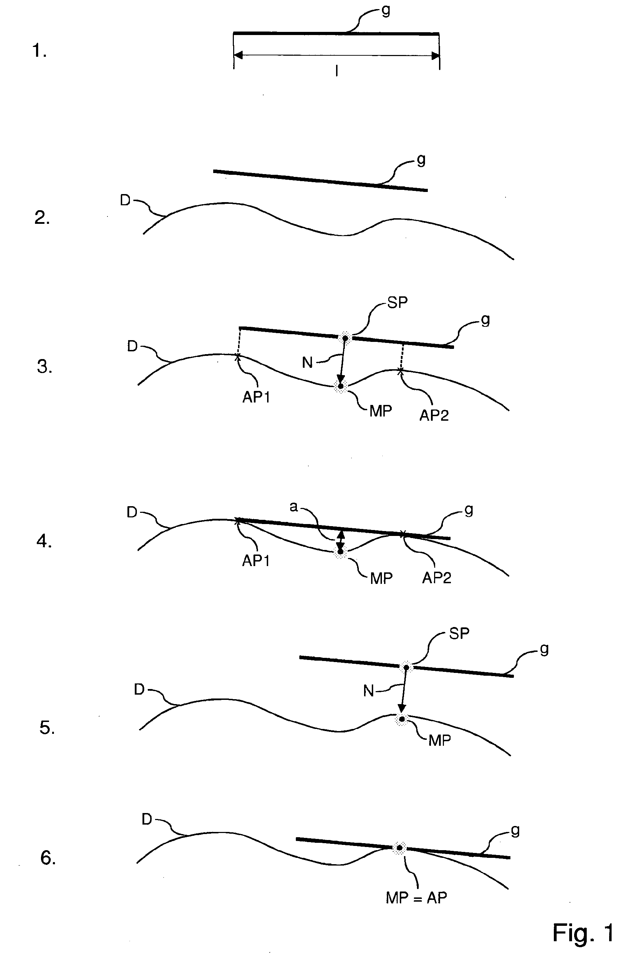

Fig. 1 zeigt in einer schematischen Darstellung ein Ausführungsbeispiel des erfindungsgemäßen Verfahrens mit einem als Filterelement dienenden Geradenabschnitt als Konkavfilter. Der Ablauf des erfindungsgemäßen Verfahrens wird anhand der Schritte 1. bis 6. erläutert. Der Geradenabschnitt dient als Filterelement. Der Einfachheit halber wird im Folgenden lediglich der Begriff Geradenabschnitt verwendet, wobei sich dieser auch auf ein Filterelement im Allgemeinen beziehen kann.

Entsprechend Schritt 1. wird als virtuelles Filterelement ein Geradenabschnitt ausgewählt. Dieser dient als Konkavfilter zum Erkennen konkaver Teilbereiche in ebenen oder konvexen Oberflächen. Dem Geradenabschnitt g wird eine definierte Länge I zugewiesen.

In Schritt 2. sind der Geradenabschnitt g und die dreidimensionalen Messdaten D schematisch dargestellt. Die Messdaten D enthalten einzelne Messpunkte und repräsentieren eine im Wesentlichen konvexe Oberfläche mit einem konkaven Teilbereich. Der Geradenabschnitt g wird - als Konkavfilter - von der konvex gewölbten Seite an die Oberfläche bzw. die Messdaten D herangeführt.

In Schritt 3. ist die Ausrichtung des Geradenabschnitts g bezüglich der Messdaten D dargestellt. Der Geradenabschnitt g besitzt einen Schwerpunkt SP. Der Schwerpunkt SP befindet sich in der Mitte des Geradenabschnitts g. Vom Schwerpunkt SP ausgehend wird die Normale N definiert. Die Normale N steht senkrecht auf dem Geradenabschnitt g und zeigt auf einen ausgewählten Messpunkt MP. Die möglichst parallele Ausrichtung des Geradenabschnitts g bezüglich der Messdaten D erfolgt automatisch. Hierbei wird, was nicht dargestellt ist, eine Ausgleichsgerade durch den betrachteten 3D-Messpunkt MP und die umliegenden Messpunkte berechnet und dadurch der Anstieg ermittelt. Der Geradenabschnitt g wird derart ausgerichtet, dass es den gleichen Anstieg wie die Ausgleichsgerade hat. Somit ist der Geradenabschnitt g weitestgehend parallel zu den Messdaten D ausgerichtet.

Der betrachtete Messpunkt MP befindet sich in einem konkaven Teilbereich der Messdaten D. Im Anschluss an die Ausrichtung des Geradenabschnitts g erfolgt die Bestimmung der Auflagepunkte AP1 und AP2. Hierbei wird auf beiden Seiten des Schwerpunkts SP des Geradenabschnitts g der höchste Punkt der Messdaten D, d.h. jeweils der Punkt mit dem geringsten Abstand zum Geradenabschnitt g bestimmt. Hierdurch sind die Auflagepunkte AP1 und AP2 definiert. Anschließend wird der Geradenabschnitt g entlang der Normalen N an die Messdaten D herangeführt, bis der Geradenabschnitt g auf den Auflagepunkten AP1 und AP2 aufliegt.

Diese Situation ist in Schritt 4. dargestellt. Der Geradenabschnitt g liegt auf den Auflagepunkten AP1 und AP2 auf den Messdaten D auf. Entlang der Normalenrichtung N wird der Abstand a gemessen bzw. errechnet und dem aktuell betrachteten Messpunkt MP zugeordnet.

In Schritt 5. und Schritt 6. befindet sich der betrachtete Messpunkt MP - abweichend von den Schritten 3. und 4. - in einem konvexen Teilbereich der Oberfläche. Die möglichst parallele Ausrichtung des Geradenabschnitts g bezüglich den Messdaten D erfolgt, wie in Schritt 3. beschrieben, durch eine Ausgleichsgerade. Allerdings ist der betrachtete Messpunkt MP der höchste Punkt der konvexen Teilfläche, d.h. der Punkt mit dem geringsten Abstand zum Geradenabschnitt g. Somit fallen der aktuell betrachtete Messpunkt MP und der Auflagepunkt AP für den Geradenabschnitt g zusammen. Der Geradenabschnitt g wird entlang seiner Normalen N solange an die Messdaten D herangeführt, bis der Geradenabschnitt g auf dem Auflagepunkt AP bzw. auf dem Messpunkt MP aufliegt.

Diese Situation ist in Schritt 6. gezeigt. Der Geradenabschnitt g liegt auf dem Auflagepunkt AP bzw. auf dem aktuell betrachteten Messpunkt MP auf. Der gemessene Abstand zwischen Messpunkt MP und Geradenabschnitt g ist null. Dieser Messwert wird dem aktuell betrachteten Messpunkt MP zugeordnet.

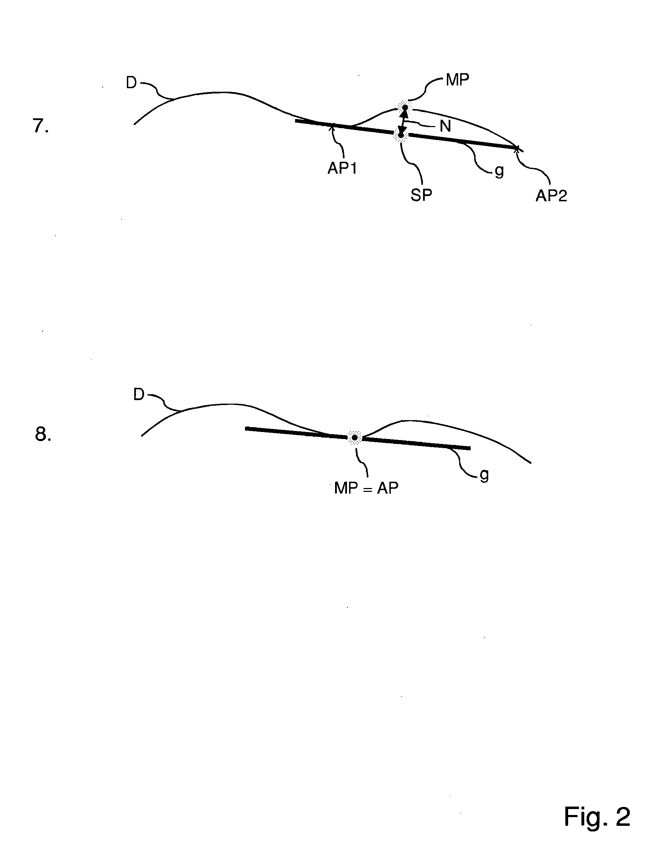

Fig. 2 zeigt in einer schematischen Darstellung ein Ausführungsbeispiel des erfindungsgemäßen Verfahrens mit einem als Filterelement dienenden Geradenabschnitt als Konvexfilter. Hierbei wird der Geradenabschnitt g als Konvexfilter zum Erkennen konvexer Teilbereiche in im Wesentlichen konkaven Oberflächen eingesetzt. Der Geradenabschnitt g wird - als Konvexfilter - von der konkavgewölbten Seite an die Oberfläche bzw: an die Messdaten D herangeführt. Die möglichst parallele Ausrichtung des Geradenabschnitts g bezüglich den Messdaten D erfolgt analog zur Ausrichtung beim Konkavfilter, so dass zur Vermeidung von Wiederholungen auf die Ausführungen zu Schritt 3. in Fig. 1 verwiesen werden darf.

In Schritt 7. sind in Fig. 2 der Geradenabschnitt g und die Messdaten D schematisch dargestellt. Der Geradenabschnitt g ist nach erfolgter Ausrichtung bereits an die Messdaten D herangeführt. Der aktuell betrachtete Messpunkt MP befindet sich in einem konvexen Teilbereich. Der Geradenabschnitt g liegt auf den Auflagepunkten AP1 und AP2 auf den Messdaten D auf. Entlang der Normalen N wird der Abstand a errechnet und dem aktuell betrachteten Messpunkt MP zugeordnet.

In Schritt 8. befindet sich der aktuell betrachtete Messpunkt MP in einem konkaven Teilbereich der Messdaten D. Der Geradenabschnitt g ist bereits möglichst parallel zu den Messdaten D positioniert und entlang seiner Normalen zu den Messdaten geführt oder verschoben, so dass der Geradenabschnitt g auf den Messdaten D aufliegt. Hierbei ist der Auflagepunkt AP - analog zu Schritt 6. in Fig. 1 - der aktuell betrachtete Messpunkt MP. Der Abstand zwischen dem Geradenabschnitt g und dem aktuell betrachteten Messpunkt MP ist somit null. Dieser Messwert wird dem aktuellen Messpunkt zugeordnet.

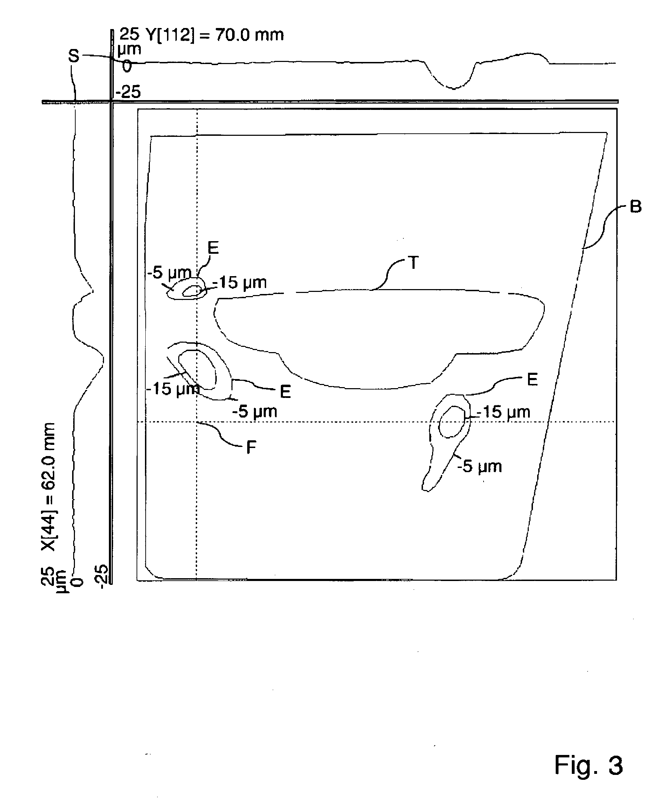

Fig. 3 zeigt ein Diagramm, in dem am Beispiel des Bereichs um eine Griffmulde einer Fahrzeugtür die Messergebnisse eines Konkavfilters dargestellt sind. Im Messbereich B sind mehrere Einfallstellen oder Vertiefungen E zu erkennen. Mit einem Fadenkreuz F sind Schnittpositionen in zwei Koordinatenrichtungen markiert, wobei entsprechende Schnittdarstellungen S dargestellt sind. Im Bereich der Türgriffmulde T wurden keine Messdaten aufgenommen. Die Einfallstellen oder Vertiefungen E sind deutlich zu erkennen und können durch Anfahren oder Auswählen mit dem Fadenkreuz genau ausgewertet werden.

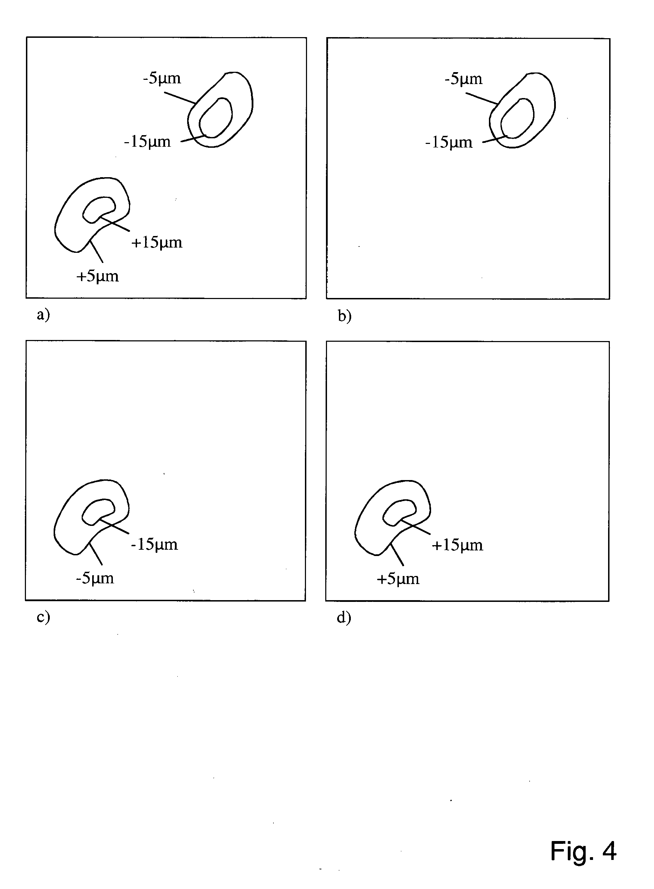

Fig. 4 zeigt mehrere Diagramme mit teilweise invertierten Messwerten. Schaubild a) zeigt Messdaten mit einer erhabenen und einer vertieften Abweichung der Oberflächenform. Erhebungen sind mit einem positiven, Vertiefungen mit einem negativen Vorzeichen versehen. Zur Darstellung konvexer Flächen in konkaven Bereichen kann das Ergebnis invertiert werden. Eine Vertiefung auf der Rückseite entspricht dann einer Erhöhung auf der Vorderseite. In Schaubild b) ist die Vertiefung, d.h. die vertiefende Abweichung, mit dem Konkavfilter dargestellt. Die Zahlenwerte haben ein negatives Vorzeichen. In Schaubild c) ist eine erhabene Abweichung von der Rückseite mit den Konvexfiltern dargestellt. Von der Rückseite betrachtet ist diese Abweichungen vertieft, entsprechend sind die Zahlenwerte negativ. In Schaubild d) wird die Erhebung, d.h. die erhabene Abweichung mit einem positiven Zahlenwert gezeigt.

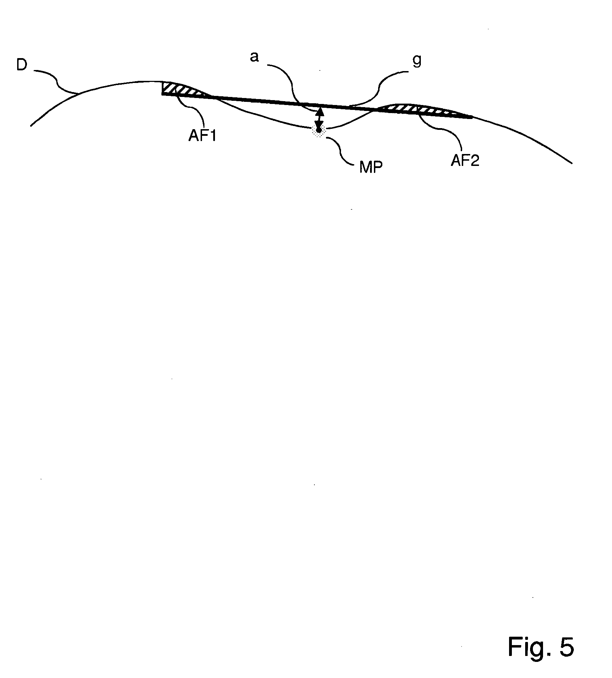

Fig. 5 zeigt in einer schematischen Darstellung ein Ausführungsbeispiel des erfindungsgemäßen Verfahrens mit einem als Filterelement dienenden Geradenabschnitt als Konkavfilter. Die möglichst parallele Ausrichtung des Geradenabschnitts g bezüglich den Messdaten D erfolgt analog zur Ausrichtung beim Konkavfilter, so dass zur Vermeidung von Wiederholungen auf die Ausführungen bis zu Schritt 3. in Fig. 1 verwiesen werden darf. Abweichend von Schritt 4. in Fig. 1 wird der Geradenabschnitt so angeordnet, dass die schraffiert dargestellten Flächen AF1 und AF2 jeweils gleich groß sind und einem bestimmten vorgegebenen Betrag, dem Parameter "Kraft", entsprechen.

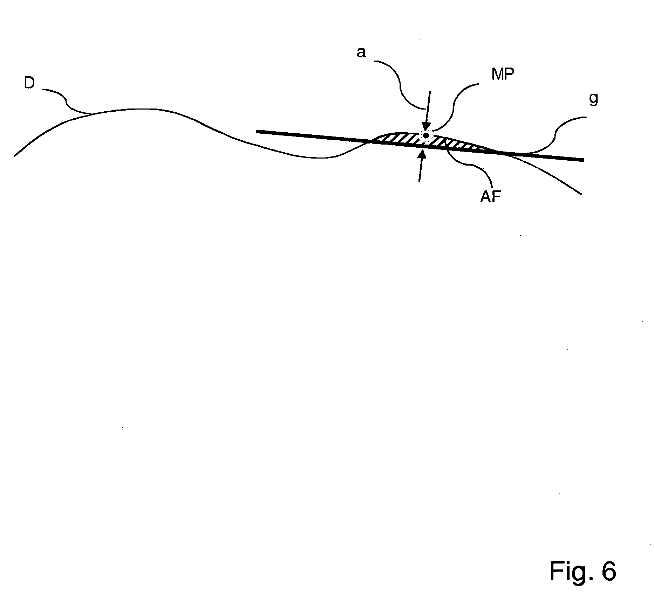

Fig. 6 zeigt in einer schematischen Darstellung ein Ausführungsbeispiel des erfindungsgemäßen Verfahrens mit einem als Filterelement dienenden Geradenabschnitt als Konkavfilter. Die möglichst parallele Ausrichtung des Geradenabschnitts g bezüglich den Messdaten D erfolgt analog zur Ausrichtung beim Konkavfilter, so dass zur Vermeidung von Wiederholungen auf die Ausführungen zu Schritt 5. in Fig. 1 verwiesen werden darf. Abweichend von Schritt 6. in Fig. 1 wird der Geradenabschnitt so angeordnet, dass die schraffiert dargestellten Flächen AF einem bestimmten vorgegebenen Betrag, dem Parameter "Kraft", entsprechen. In vorteilhafter Weise sollte gelten AF = AF1 + AF2.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Verfahrens lediglich zur Erörterung der beanspruchten Lehre dienen, diese jedoch nicht auf die Ausführungsbeispiele einschränken.

### Bezugszeichenliste

- a: Abstand
- AF, AF1, AF2: Fläche
- AP, AP1, AP2: Auflagepunkt
- B: Messbereich
- D: Messdaten
- E: Einfallstelle
- F: Fadenkreuz
- g: Geradenabschnitt
- MP: Messpunkt
- N: Normale
- S: Schnittdarstellung
- T: Türgriffmulde

## Patentansprüche

1. Verfahren zur Erkennung und Vermessung von lokalen Formabweichungen in ebenen, gekrümmten oder gewölbten Oberflächen eines Prüfobjekts, wobei dreidimensionale Messdaten (D) der Oberflächen mit einer Auswerteeinrichtung augewertet werden, wobei die Auswerteeinrichtung mindestens ein virtuelles Filterelement als Konkavfilter zum Erkennen konkaver Teilbereiche in ebenen oder konvexen Oberflächen und/oder als Konvexfilter zum Erkennen konvexer Teilbereiche in ebenen oder konkaven Oberflächen einsetzt, wobei das Filterelement Beträge der Formabweichungen ermittelt und wobei diese über eine Ausgabeeinrichtung als Messwerte ausgegeben werden, **dadurch gekennzeichnet, dass** das Filterelement möglichst parallel zu den Messdaten (D) orientiert wird und bezüglich Messpunkten der Messdaten (D) jeweils derart ausgerichtet wird, dass der aktuell betrachtete Messpunkt (MP) auf der vom Schwerpunkt (SP) des Filterelements ausgehenden Normalen (N) des Filterelements liegt und dass mindestens ein Messpunkt (MP) der Messdaten (D), der den geringsten Abstand zum Filterelement aufweist, als Auflagepunkt (AP) definiert wird.

2. Verfahren nach Anspruch 1, **dadurch gekennzeichnet, dass** die parallele Orientierung des Filterelements zu den Messdaten mittels einer Ausgleichsgeraden oder einer Ausgleichsebene durch einen aktuell betrachteten Messpunkt (MP) und mehrere umliegende Messpunkte der Messdaten erfolgt, dass das Filterelement entlang seiner Normalen (N) derart in Richtung der Messdaten (D) verschoben werden kann, so dass das Filterelement auf dem Auflagepunkt (AP) aufliegt und/oder dass das Filterelement als Geradenabschnitt (g) oder als Flächenelement ausgebildet ist.

3. Verfahren nach Anspruch 2, **dadurch gekennzeichnet, dass** der Abstand (a) zwischen Filterelement und betrachtetem Messpunkt (MP) in Richtung der Normalen (N) des Filterelements oder in einer definierten Richtung, insbesondere einer Koordinatenrichtung, gemessen wird.

4. Verfahren nach einem der Ansprüche 1 bis 3, **dadurch gekennzeichnet, dass** der Konkavfilter von der konvex gewölbten Seite an die Messdaten (D) herangeführt wird und/oder dass der Konvexfilter von der konkav gewölbten Seite an die Messdaten (D) herangeführt wird.

5. Verfahren nach einem der Ansprüche 1 bis 4, **dadurch gekennzeichnet, dass** die Messwerte als Grauwert oder in Farbdarstellung in einem Diagramm dargestellt und/oder dass die Messwerte durch einen Projektor auf das Prüfobjekt projiziert werden.

6. Verfahren nach einem der Ansprüche 1 bis 5, **dadurch gekennzeichnet, dass** die Messdaten (D) vor einer Verarbeitung mit dem virtuellen Filterelement mit Glättungsflitern, insbesondere Median- und/oder Gauesfiltern, gefiltert werden und/oder dass die Messwerte nach einer Verarbeitung mit dem virtuellen Filterelement mit Hochpass- und/oder Tiefpassfiltern gefiltert werden.

7. Verfahren nach einem der Ansprüche 1 bis 6, **dadurch gekennzeichnet, dass** zur Vereinfachung und/oder zur Datenreduzierung nur ausgewählte Messpunkte durch das Filterelement ausgewertet werden, dass Punkte auf dem Filterelement festgelegt werden, mit deren Abstand zu den Messdaten (D) die Auswertung erfolgt und/oder dass eine äquidistante Punktewolke für die Messdaten (D) verwendet wird.

8. Verfahren nach einem der Ansprüche 1 bis 7, **dadurch gekennzeichnet, dass** die Orientierung des Filterelements für jeden Messpunkt oder für ausgewählte Messpunkte der Messdaten (D) variabel vorgegeben wird und/oder dass das Filterelement zur Vermeidung von Artefakten in Randbereichen der Oberfläche oder bei nichtvermessenen Bereichen der Oberfläche verkleinert wird.

9. Verfahren nach einem der Ansprüche 1 bis 8, **dadurch gekennzeichnet, dass** die Messwerte des Konvexfilters zur gemeinsamen Darstellung mit den Messwerten des Konkavfilters in einem Schaubild invertiert werden.

10. Verfahren nach einem der Ansprüche 1 bis 9, **dadurch gekennzeichnet, dass** das Filterelement um einen bestimmbaren, insbesondere durch einen Parameter Kraft festlegbaren Betrag unterhalb des Auflagepunkts aufliegt und/oder dass Größe, Form und/oder Orientierung des Filterelements und/oder die Auswahl von Konkav- oder Konvexfilter aus den CAD-Daten berechnet werden und/oder dass die Flexibilität des Filterelements vorgegeben wird.

11. Verfahren nach einem der Ansprüche 1 bis 10, **dadurch gekennzeichnet, dass** die Messdaten (D) durch Vermessung einer Oberfläche als Messpunkte, insbesondere als Punktewolke, ermittelt werden oder als geometrische Flächendaten, insbesondere mit ausgewählten Allesspunkten, vorliegen, wobei die zu verarbeitenden Messdaten (D) und/oder die berechneten Messwerte mittels CAD-Vergleich, Assoziativspeicher und/oder Polynomapproximation vor- und/oder nachbearbeitet werden können.

12. Verfahren nach einem der Ansprüche 1 bis 11, **dadurch gekennzeichnet, dass** die Messdaten (D) mehrfach mit unterschiedlichen Filterelementen, insbesondere mit Konkavfilter und Konvexfilter, gefiltert werden, wobei vorzugsweise aus den Ergebnissen der einzelnen Filterungen durch Datenfusion ein Gesamtergebnis errechnet wird.

13. Verfahren nach einem der Ansprüche 1 bis 12, **dadurch gekennzeichnet, dass** neben dreidimensionalen Messdaten (D) auch Daten anderer Dimensionen oder physikalischer Größen, insbesondere 2D-Daten oder 4D-Daten, verarbeitet werden.

14. Vorrichtung zur Erkennung und Vermessung lokaler Formabweichungen in ebenen, gekrümmten oder gewölbten Oberflächen eines Prüfobjekts, mit einer Auswerteeinrichtung die geeignet ist zur Durchführung eines Verfahrens nach einem der Ansprüche 1 bis 13, wobei die Auswerteeinrichtung mindestens ein virtuelles Filterelement als Konkavfilter zum Erkennen konkaver Teilbereiche in ebenen oder konvexen Oberflächen und/oder als Konvexfilter zum Erkennen konvexer Teilbereiche in ebenen oder konkaven Oberflächen aufweist und wobei der Auswerteeinrichtung eine Ausgabeeinrichtung zur Ausgabe der Messwerte zugeordnet ist,
**dadurch gekennzeichnet, dass** das Filterelement möglichst parallel zu den Messdaten (D) orientiert ist und bezüglich Messpunkten der Messdaten (D) jeweils derart ausgerichtet ist, dass der aktuell betrachtete Messpunkt (MP) auf der vom Schwerpunkt (SP) des Filterelements ausgehenden Normalen (N) des Filterelements liegt und dass mindestens ein Messpunkt (MP) der Messdaten (D), der den geringsten Abstand zum Filterelement aufweist, als Auflagepunkt (AP) definiert ist.

15. Vorrichtung nach Anspruch 14, **dadurch gekennzeichnet, dass** eine Einrichtung zur optischen, insbesondere dreidimensionalen Vermessung des Prüfobjekts vorgesehen ist und/oder dass ein Projektor zum Projizieren der Messwerte, insbesondere auf das Prüfobjekt, vorgesehen ist.

## Claims

1. Method for detecting and measuring local shape deviations in flat, bent or curved surfaces of a test object, wherein three-dimensional measurement data (D) of the surfaces are evaluated by means of an evaluating device, wherein the evaluating device uses at least one virtual filter element as a concave filter for detecting concave sub-regions in flat or convex surfaces and/or as a convex filter for detecting convex sub-regions in flat or concave surfaces, wherein the filter element determines amounts of the shape deviations and wherein those amounts are output by an output device as measurement values, **characterised in that** the filter element is oriented as parallel as possible to the measurement data (D) and is so aligned with respect to measurement points of the measurement data (D) that the measurement point (MP) currently under consideration lies on the normal (N) of the filter element, starting from the centre of gravity (SP) of the filter element, and **in that** at least one measurement point (MP) of the measurement data (D), which is at the smallest distance from the filter element, is defined as a contact point (AP).

2. Method according to claim 1, **characterised in that** the parallel orientation of the filter element to the measurement data is effected by means of a line of best fit or an equalisation plane through the measurement point (MP) currently under consideration and a plurality of surrounding measurement points of the measurement data, **in that** the filter element can be displaced along its normal (N) in the direction towards the measurement data (D) in such a manner that the filter element abuts the contact point (AP), and/or **in that** the filter element is in the form of a straight-line segment (g) or in the form of an area segment.

3. Method according to claim 2, **characterised in that** the distance (a) between the filter element and the measurement point (MP) under consideration is measured in the direction of the normal (N) of the filter element or in a defined direction, in particular a coordinate direction.

4. Method according to any one of claims 1 to 3, **characterised in that** the concave filter is brought up to the measurement data (D) from the convexly curved side and/or **in that** the convex filter is brought up to the measurement data (D) from the concavely curved side.

5. Method according to any one of claims 1 to 4, **characterised in that** the measurement values are shown as a grey-scale value or in a colour display in a diagram, and/or **in that** the measurement values are projected onto the test object by a projector.

6. Method according to any one of claims 1 to 5, **characterised in that** the measurement data (D) are filtered by smoothing filters, in particular median and/or Gaussian filters, before they are processed by the virtual filter element, and/or **in that** the measurement values are filtered by high-pass and/or low-pass filters after they have been processed by the virtual filter element.

7. Method according to any one of claims 1 to 6, **characterised in that**, for the purpose of simplification and/or data reduction, only selected measurement points are evaluated by the filter element, **in that** points are defined on the filter element with whose distance from the measurement data (D) the evaluation is made, and/or **in that** an equidistant point cloud for the measurement data (D) is used.

8. Method according to any one of claims 1 to 7, **characterised in that** the orientation of the filter element is specified variably for each measurement point or for selected measurement points of the measurement data (D), and/or **in that** the filter element is made smaller in order to avoid artefacts in edge regions of the surface or in unmeasured regions of the surface.

9. Method according to any one of claims 1 to 8, **characterised in that** the measurement values of the convex filter are inverted for depiction together with the measured values of the concave filter in a diagram.

10. Method according to any one of claims 1 to 9, **characterised in that** the filter element abuts beneath the contact point by a determinable amount, in particular by an amount that can be defined by a parameter force, and/or **in that** the size, shape and/or orientation of the filter element and/or the choice of a concave or convex filter are calculated from the CAD data, and/or **in that** the flexibility of the filter element is specified.

11. Method according to any one of claims 1 to 10, **characterised in that**, by measurement of a surface, the measurement data (D) are determined as measurement points, in particular as a point cloud, or are present as geometric surface data, in particular with selected measurement points, wherein the measurement data (D) to be processed and/or the calculated measurement values can be pre- and/or post-processed by means of CAD comparison, associative memory and/or polynomial approximation.

12. Method according to any one of claims 1 to 11, **characterised in that** the measurement data (D) are filtered several times by different filter elements, in particular by concave filters and convex filters, wherein an overall result is preferably calculated by data fusion from the results of the individual filtering operations.

13. Method according to any one of claims 1 to 12, **characterised in that**, as well as three-dimensional measurement data (D), data of other dimensions or physical quantities, in particular 2D data or 4D data, are also processed.

14. Device for detecting and measuring local shape deviations in flat, bent or curved surfaces of a test object, having an evaluating device which is suitable for carrying out a method according to any one of claims 1 to 13, wherein the evaluating device comprises at least one virtual filter element as a concave filter for detecting concave sub-regions in flat or convex surfaces and/or as a convex filter for detecting convex sub-regions in flat or concave surfaces, and wherein an output device for outputting the measurement values is associated with the evaluating device,
**characterised in that** the filter element is oriented as parallel as possible to the measurement data (D) and is so aligned with respect to measurement points of the measurement data (D) that the measurement point (MP) currently under consideration lies on the normal (N) of the filter element, starting from the centre of gravity (SP) of the filter element, and **in that** at least one measurement point (MP) of the measurement data (D), which is at the smallest distance from the filter element, is defined as a contact point (AP).

15. Device according to claim 14, **characterised in that** a device for the optical, in particular three-dimensional measurement of the test object is provided, and/or **in that** a projector for projecting the measured values, in particular onto the test object, is provided.

## Revendications

1. Procédé de détection et de mesurage d'écarts de forme locaux sur des surfaces planes, courbes ou bombées d'un objet à mesurer, dans lequel des données de mesure tridimensionnelle (D) des surfaces sont évaluées par un équipement d'évaluation, dans lequel l'équipement d'évaluation met en oeuvre au moins un élément de filtre virtuel sous forme de filtre concave pour détecter des zones partielles concaves sur des surfaces planes ou convexes et/ou sous forme de filtre convexe pour détecter des zones partielles convexes dans des surfaces planes ou concaves, dans lequel l'élément de filtre détermine les grandeurs des écarts de forme, et dans lequel celles-ci sont délivrées par l'intermédiaire d'un équipement de sortie sous forme de valeurs mesurées, **caractérisé en ce que** l'élément de filtre est orienté de préférence parallèlement aux données de mesure (D) et est aligné par rapport aux points de mesure des données de mesure (D) respectivement de telle sorte que le point de mesure (MP) actuellement observé se trouve sur la normale (N) de l'élément de filtre, partant du barycentre (SP) de l'élément de filtre, et **en ce qu'**au moins un point de mesure (MP) des données de mesure (D) ayant la plus petite distance par rapport à l'élément de filtre est défini comme un point de contact (AP).

2. Procédé selon la revendication 1, **caractérisé en ce que** l'orientation parallèle de l'élément de filtre par rapport aux données de mesure s'effectue au moyen d'une droite de compensation ou d'un plan de compensation passant par un point de mesure (MP) actuellement observé et plusieurs points de mesure environnants parmi les données de mesure, **en ce que** l'élément de filtre peut être déplacé suivant sa normale (N) en direction des données de mesure (D) de telle sorte que l'élément de filtre repose au point de contact (AP), et/ou **en ce que** l'élément de filtre est réalisé comme un segment de droite (g) ou un élément de surface.

3. Procédé selon la revendication 2, **caractérisé en ce que** la distance (a) entre l'élément de filtre et le point de mesure (MP) observé est mesurée en direction de la normale (N) de l'élément de filtre ou dans une direction définie, en particulier une direction de coordonnées.

4. Procédé selon l'une quelconque des revendications 1 à 3, **caractérisé en ce que** le filtre concave est rapproché des données de mesure (D) par le côté à courbure convexe, et/ou **en ce que** le filtre convexe est rapproché des données de mesure (D) par le côté à courbure concave,

5. Procédé selon l'une quelconque des revendications 1 à 4, **caractérisé en ce que** les valeurs mesurées sont représentées comme une valeur de gris ou dans une représentation en couleur sur un schéma, et/ou **en ce que** les valeurs mesurées sont projetées sur l'objet à mesurer à l'aide d'un projecteur.

6. Procédé selon l'une quelconque des revendications 1 à 5, **caractérisé en ce qu'**avant un traitement par l'élément de filtre virtuel, les données de mesure (D) sont filtrées avec des filtres de lissage, en particulier des filtres médians et/ou de gauss, et/ou **en ce qu'**après un traitement par l'élément de filtre virtuel, les valeurs mesurées sont filtrées par des filtres passe-haut et/ou passe-bas.

7. Procédé selon l'une quelconque des revendications 1 à 6, **caractérisé en ce que** pour la simplification et/ou la réduction des données, seuls des points de mesure sélectionnés sont évalués par l'élément de filtre, **en ce que** des points sont établis sur l'élément de filtre dont la distance par rapport aux données de mesure (D) est utilisée pour l'évaluation, et/ou **en ce qu'**un nuage de points équidistants est utilisé pour les données de mesure (D).

8. Procédé selon l'une quelconque des revendications 1 à 7, **caractérisé en ce que** l'orientation de l'élément de filtre est spécifié de manière variable pour chaque point de mesure ou pour des points de mesure sélectionnés parmi les points de mesure (D), et/ou **en ce que** l'élément de filtre est diminué pour éviter les artéfacts dans les zones marginales de la surface ou dans des zones non mesurées de la surface.

9. Procédé selon l'une quelconque des revendications 1 à 8, **caractérisé en ce que** les valeurs mesurées du filtre convexe sont inversées sur un diagramme pour une représentation commune avec les valeurs mesurées du filtre concave.

10. Procédé selon l'une quelconque des revendications 1 à 9, **caractérisé en ce que** l'élément de filtre repose au-dessous du point de contact d'une certaine grandeur pouvant être déterminée, en particulier fixée par un paramètre force, et/ou **en ce que** la dimension, la forme et/ou l'orientation de l'élément de filtre et/ou la sélection du filtre concave ou convexe sont calculées à partir de données de CAO, et/ou en ce que la variabilité de l'élément de filtre est prédéterminée.

11. Procédé selon l'une quelconque des revendications 1 à 10, **caractérisé en ce que** les données de mesure (D) sont déterminées par mesurage d'une surface sous forme de points de mesure, en particulier de nuage de points, ou existent sous forme de données de surface géométriques, en particulier avec des points de mesure sélectionnés, dans lequel les données de mesure (D) à traiter et/ou les valeurs mesurées calculées peuvent être prétraitées et/ou post-traitées au moyen d'une comparaison CAO, d'une mémoire associative et/ou d'une approximation polynomiale.

12. Procédé selon l'une quelconque des revendications 1 à 11, **caractérisé en ce que** les données de mesure (D) sont filtrées à plusieurs reprises avec différents éléments de filtre, en particulier des filtres concaves et des filtres convexes, dans lequel un résultat global est calculé par fusion de données de préférence à partir des résultats de filtrages individuels.

13. Procédé selon l'une quelconque des revendications 1 à 12, **caractérisé en ce qu'**en plus des données de mesure tridimensionnelles (D), des données d'autres dimensions ou grandeurs physiques, en particulier des données 2D ou des données 4D, sont traitées.

14. Dispositif de détection et de mesurage d'écarts de forme locaux dans des surface planes, courbes ou bombées d'un objet à mesurer, comprenant un équipement d'évaluation adapté pour exécuter un procédé selon l'une quelconque des revendications 1 à 13, dans lequel l'équipement d'évaluation présente au moins un élément de filtre virtuel en tant que filtre concave pour détecter des zones partielles concaves sur des surfaces planes ou convexes et/ou en tant que filtre convexe pour détecter des zones partielles convexes dans des surfaces planes ou concaves, dans lequel un équipement de sortie pour délivrer les valeurs mesurées est attribué à l'équipement d'évaluation, **caractérisé en ce que** l'élément de filtre est orienté de préférence parallèlement aux données de mesure (D) et est aligné par rapport aux points de mesure des données de mesure (D) respectivement de telle sorte que le point de mesure (MP) actuellement observé se trouve sur la normale (N) de l'élément de filtre, partant du barycentre (SP) de l'élément de filtre, et **en ce qu'**au moins un point de mesure (MP) des données de mesure (D) ayant la plus petite distance par rapport à l'élément de filtre est défini comme un point de contact (AP).

15. Dispositif selon la revendication 14, **caractérisé en ce qu'**un équipement pour le mesurage optique, en particulier tridimensionnel, de l'objet à mesurer est prévu, et/ou **en ce qu'**un projecteur est prévu pour projeter les valeurs mesurées, en particulier sur l'objet à mesurer.
